# Europäisches Patentamt

(19) **European Patent Office**

Office européen des brevets

(11) Veröffentlichungsnummer: **0 009 738**
**B1**

(12) ## EUROPÄISCHE PATENTSCHRIFT

(45) Veröffentlichungstag der Patentschrift:
20.10.82

(51) Int. Cl.³: **C 02 F 1/00, C 02 F 11/12,
B 01 D 31/00, B 01 D 13/00**

(21) Anmeldenummer: 79103581.9

(22) Anmeldetag: 24.09.79

(54) Filtrationsverfahren zur Abtrennung fester, schlammartiger und gelöster Anteile aus Abwasser oder aus bei der Reinigung von Abwasser anfallendem Schlamm.

(30) Priorität: 04.10.78 DE 2843307

(43) Veröffentlichungstag der Anmeldung:
16.04.80 Patentblatt 80/8

(45) Bekanntmachung des Hinweises auf die Patenterteilung:
20.10.82 Patentblatt 82/42

(84) Benannte Vertragsstaaten:
BE CH DE FR GB IT NL SE

(56) Entgegenhaltungen:
CH-A-94 019
DE-A-2 009 155
DE-A-2 546 500
FR-A-2 201 110
FR-A-2 281 783
FR-A-2 383 130
GB-A-1 256 491
US-A-2 864 506
US-A-3 523 077
US-A-3 747 766
US-A-4 039 450

DERWENT JAPANESE PATENTS REPORT, 3. November 1976, Chemical Engineering – Seite 2; Week X39-Unexamined, Nr. 72793X/39 London, G.B.

(73) Patentinhaber: HOECHST AKTIENGESELLSCHAFT,
Postfach 80 03 20, D-6230 Frankfurt/Main 80 (DE)

(72) Erfinder: Beer, Ekkehard, Liebigstrasse 4, D-6208 Bad Schwalbach (DE)

Filtrationsverfahren zur Abtrennung fester, schlammartiger und gelöster Anteile aus Abwasser oder aus bei
der Reinigung von Abwasser anfallendem Schlamm

Die Erfindung betrifft ein Filtrationsverfahren zur Abtrennung fester, schlammartiger und gelöster Anteile aus Abwasser oder aus bei der Reinigung von Abwasser anfallendem Schlamm.

Unter schlammartigen Anteilen in Abwasser sind auch gelartige oder kolloidale Medien in diesen zu verstehen.

Die im allgemeinen in Kläranlagen durchgeführte Reinigung von Abwasser erfolgt über eine Reihe von Verfahrensstufen, wie z.B. Neutralisation saurer oder alkalischer Abwässer, Vorklärung in Absetzbecken zur Entfernung von Feststoffen als Vorklärschlamm, biologische Reinigung mit Bakteriensuspensionen unter Sauerstoffeintrag und chemische Klärung durch Koagulation kolloiddisperser Stoffe.

Zur Abtrennung fester oder schlammartiger Anteile aus Abwasser ist gewöhnlich eine Vielzahl von Verfahrensschritten erforderlich. So wird beispielsweise der aus dem Absetzbecken zunächst erhaltene Vorklärschlamm anschliessend in Eindickerbecken konzentriert, der sich im Eindickerbecken absetzende Dünnschlamm nach Zugabe von organischen Flockungsmitteln mit Zentrifugen entwässert, und erst der abgetrennte Dickschlamm kann verbrannt oder kompostiert werden.

Es ist zwar bekannt (DE-A-2 331 118), Dickschlamm, z.B. mit Hilfe von schlauchförmigen Schlammfiltern aus synthetischem Gewebe zu entwässern. Das Aufkonzentrieren von Abwasser oder von Schlammen mit einem Feststoffanteil von kleiner als etwa 30 Gew.-%, insbesondere kleiner als 10 Gew.-%, ist mit diesen Vorrichtungen in der Regel auf wirtschaftliche Weise jedoch nicht möglich. In diesen Fällen kann kein ausreichend starker und mit Feststoffen des Abwassers angereicherter Filterkuchen entstehen. Insbesondere beim Arbeiten ohne Filterhilfsmittel können die Poren der Filter bereits nach kurzer Zeit verstopfen. Ferner sind Filter aus synthetischem Gewebe nur zur Abtrennung von Makroteilchen geeignet. Das erhaltene Filtrat ist gewöhnlich trüb und weist einen hohen Feststoffanteil auf. Wegen des hohen Restwassergehaltes ist der mit Schlamm gefüllte Gewebeschlauch zur Lagerung und/oder Verbrennung weniger gut geeignet.

Aus der britischen Patentschrift 1 256 491 ist ein Filtrationsverfahren bekannt, bei dem die zu filtrierende Flüssigkeit durch ein an seinen beiden Enden gehaltenes, mehrlagiges poröses Rohrstück mit innenliegender, semipermeabler Schicht hindurchgeführt wird; und dabei tritt das Filtrat durch die Rohrwand hindurch und wird ausserhalb des Rohres abgeleitet.

Das Schweizer Patent Nr. 94 019 beschreibt eine Filterpresse, die aus einem perforierten Innenrohr und einem dieses umgebenden ringförmigen Filterkörper besteht. Die zu filtrierende Flüssigkeit wird in das perforierte Innenrohr geleitet, tritt durch die Perforationsöffnungen desselben nach aussen und durch den Filterkörper hindurch und wird ausserhalb desselben abgeleitet. Der im Rohr entstehende Filterkuchen wird nach unten getrieben und dort aus dem Rohrende abgelassen.

Aus der FR-A-2 201 110 ist die Verwendung flächenhafter Gebilde aus semipermeablem Werkstoff als Filtermaterial bekannt.

Die US-A-3 747 766 beschreibt ein Filterverfahren unter Verwendung eines verschlussfreien Schlauchs aus Filterpapier, in den die zu filtrierende Flüssigkeit eingeführt wird. Im Schlauchhohlraum ist längsaxial eine Schnecke angeordnet, die in kraftschlüssigem Kontakt mit der Schlauchinnenseite steht und den Schlauch längsaxial fortbewegt und zu einer Klümpchenkette verdrillt, wobei die Klümpchen Konzentrat enthalten; durch den Verdrillungsvorgang wird aus dem Konzentrat in den Klümpchen der Klümpchenkette Flüssigkeit abgepresst.

Der Erfindung liegt die Aufgabe zugrunde, ein einfach und schnell durchführbares Filtrationsverfahren zum Abtrennen fester, schlammartiger und gelöster Anteile aus Abwasser oder aus bei der Reinigung von Abwasser anfallendem Schlamm vorzuschlagen.

Die der Erfindung zugrundeliegende Aufgabe wird gelöst durch das in Anspruch 1 angegebene Filtrationsverfahren. Vorteilhafte Ausgestaltungen der Erfindung nach Anspruch 1 sind in den auf diesen rückbezogenen Unteransprüchen konkretisiert.

Das zu filtrierende, feste oder gelöste schlammartige Anteile enthaltende Abwasser wird in dem erfindungsgemässen Verfahren vor Vorklärung oder nach Vorklärung in eine oder mehrere Schlauchlängen eingefüllt, wobei zumindest eine aus semipermeablem Material besteht. Das Filtrat tritt durch die Filterwand und wird ausserhalb des Schlauches abgeleitet, während sich die festen oder schlammartigen Anteile des Abwassers als Konzentrat auf der Innenseite der Filterschlauchlänge bzw. in dieser ansammeln. Findet eine Vorklärung des Abwassers statt, kann auch der dadurch erhaltene Vorklärschlamm oder der in einem Eindicker erhaltene Dünnschlamm nach dem erfindungsgemässen Verfahren filtriert werden.

Eine mehrstufige Reinigung des Abwassers mit mehreren hintereinander angeordneten schlauchförmigen Filtern, welche jeweils einen kleineren durchschnittlichen Porendurchmesser und einen kleineren Durchmesser aufweisen, ist empfehlenswert, wenn die Durchmesser der Feststoffteilchen über einen grossen Bereich streuen, z.B. von 0,001 bis 1 Mikrometer. Auch diese mehrstufige Reinigung ermöglicht grosse Durchsatzleistungen.

Zur Verbesserung des Filtrationseffektes wird das Abwasser oder der Schlamm mit üblichen Fäll- und/oder Flockungsmitteln behandelt. Hydrophobe Stoffe, wie Fette oder ölige Substanzen, werden durch spezielle Chemikalien gebunden, wie sie bereits bei der Abwasserreinigung üblich sind.

Durch Zusatz von porösen Filterhilfsstoffen, wie Asche, Koksgrus oder Holzmehl, bleiben innerhalb des Konzentrates Durchlasswege für die austretende Flüssigkeit erhalten.

Durch den erfindungsgemässen Einsatz zumindest eines schlauchförmigen Filters aus semipermeablem Material wird eine optimale Steigerung der Filtrationsleistung erreicht. Vorteilhafterweise steht dessen Aussenwand mit einer Lösung, insbesondere Salzlösung, in Kontakt, wobei die Konzentration der gelösten Stoffe dieser Lösung grösser ist als die Konzentration der gelösten Stoffe im Filterschlauch.

Das vorliegende Filtrationsverfahren arbeitet somit auf Basis des natürlichen osmotischen Ausgleichs und dient z.B. zur Aufbereitung von Schlammen, die in der Industrie anfallen und nach Trocknen und Entfernen von bestimmten Stoffen in der Produktion wieder eingesetzt werden können.

Als Filtermaterial werden beispielsweise Papiere, Vliese und/oder Gewebe verwendet. Die semipermeable Filterschlauchlänge besteht aus einer üblichen Membran hoher Festigkeit und chemischer Beständigkeit, z.B. aus Polyamid, Polysulfon oder regenerierter Cellulose, und ermöglicht die Abtrennung relativ kleiner Feststoffpartikel, z.B. kleiner als 1 Mikrometer.

Der Durchmesser der semipermeablen Schläuche kann in weiten Bereichen, insbesondere 10 bis 500 mm, variieren. Die Wahl eines optimalen Schlauchdurchmessers hängt in erster Linie ab von der maximal erreichbaren Dicke des Filterkuchens oder der Aufkonzentrierung, die durch Art des Abwassers bedingt sind. Bei gut filtrierbaren Medien ist der Schlauchdurchmesser möglichst gross. Vorzugsweise entspricht der Schlauchdurchmesser etwa der zweifachen maximal erreichbaren Stärke des Filterkuchens.

Feste, schlammartige oder gelöste Anteile enthaltendes Abwasser oder Schlamm wird unter einem Druck von 1 bis 10 bar, insbesondere einem Druck von 2 bis 5 bar, in eine Schlauchlänge aus semipermeablem Material mittels einer Fördereinrichtung, beispielsweise einer Pumpe oder einer Schnecke, mittels eines Füllrohres und durch dieses in den Hohlraum der Schlauchlänge aus semipermeablem Filtermaterial eingepresst.

Die Schlauchlänge, die an ihrem vorderen Ende einen originären Verschluss besitzt, ist dabei auf dem Füllrohr derart gefältelt aufgeschoben, dass sich der originäre Verschluss am vorderen Ende der Schlauchlänge nahe benachbart der Füllrohrhohlraummündungsöffnung befindet und das offene, hintere Ende der aufgeschobenen Schlauchlänge am Füllrohr befestigt ist.

Beim Befüllen der Schlauchlänge mit bezeichnetem Abwasser bzw. bezeichnetem Schlamm wird diese nach Massgabe fortschreitender Füllung des Schlauchhohlraums kontinuierlich oder stufenweise, vorzugsweise horizontal sowie mit ihrem verschlossenen vorderen Ende voran in Richtung vom Füllrohr weg, fortbewegt; dabei wird jeweils nur derjenige Abschnitt der Schlauchlänge befüllt, der sich jeweils zwischen der Mündungsöffnung des Füllrohrhohlraumes und dem originären Verschluss am vorderen Ende der Schlauchlänge bzw. zwischen dieser und der im Schlauch bereits befindlichen Konzentratmenge befindet.

Die Befüllung der Schlauchlänge beginnt dabei nahe dem originären Verschluss am vorderen Ende der Schlauchlänge, wobei sich nach Massgabe fortschreitender Befüllung der Schlauchlänge der Abstand zwischen dem originären Verschluss am vorderen Ende der Schlauchlänge und dem Ort des Eintritts des Abwassers bzw. des Schlammes in den Schlauch, fortschreitend bis zum anderen Ende der Schlauchlänge hin, fortlaufend stetig vergrössert, anschliessend wird das hintere Ende der Schlauchlänge verschlossen, wobei Konzentrat im Schlauch, beginnend am originären Verschluss der Schlauchlänge und kontinuierlich fortschreitend bis zum anderen Ende desselben hin abgelagert wird; der Ort des Eintritts des Abwassers, bzw. des Schlammes in die Schlauchlänge entspricht dabei der Austrittsöffnung des Füllrohres.

Die angegebene Verfahrensweise hat den Vorteil, dass die Schlauchlänge aus semipermeablem Material nicht in einem Schritt über ihre gesamte Länge, sondern kontinuierlich oder schrittweise befüllt wird.

Die Fortbewegung der Schlauchlänge aus Filtermaterial in angegebener Weise und in angegebener Richtung erfolgt durch die Druckkraft des in sie eingepressten Abwassers oder in sie eingepressten Schlammes. Gegebenenfalls wird die Fortbewegung des Schlauches durch eine Fördereinrichtung mit einer der Durchsatzleistung angepassten Geschwindigkeit unterstützt.

Vorzugsweise beginnt man mit dem Fortbewegen des Schlauches, sobald in dem mit Abwasser oder Schlamm gefüllten Teil des Schlauches die optimale Konzentrierung erreicht ist. Die Fortbewegungsgeschwindigkeit der Schlauchlänge aus Filtermaterial vom Füllrohr steht somit im Zusammenhang mit der Filtrationsleistung des semipermeablen Schlauchs und ist bei gut filtrierbaren Medien besonders hoch.

Die gegebenenfalls verwendete Fördereinrichtung kann gleichzeitig die Funktion von Form- und/oder Stützelementen übernehmen, welche der gefüllten Schlauchlänge aus semipermeablem Filtermaterial eine gewünschte Querschnittsform verleihen und den Filterschlauch gegen von innen wirkenden Überdruck abstützen. Die gegebenenfalls verwendete Fördereinrichtung verbessert die Gleichmässigkeit des Schlauchvorschubs bzw. Schlauchabzugs vom Füllrohr. Die Fördereinrichtung besteht beispielsweise aus umlaufenden Förderbändern aus perforiertem oder saugfähigem Material, z.B. aus Metallbändern mit einer Schwammschicht auf der Oberfläche. Es ist auch z.B. möglich, den schlauchförmigen Filter durch ein rohrförmiges Gewebe, einen Netzschlauch, ein poröses Stützrohr oder ein Siebgeflecht zu befördern, abzustützen und zu formen. Durch die Anordnung dieser Einrichtungen werden die Feststoffdicke im Inneren des schlauchförmigen Filters, der Filtrationswiderstand und die Filtrationsgeschwindigkeit beeinflusst. Bei schlecht filtrierbaren Abwässern oder Schlammen, die nur eine geringe Feststoffdicke im Inneren des Filters zulassen oder wenn nur ein niedriger Innendruck gestattet ist, wird der Filter nur zwischen zwei parallel und in horizontaler Lage verlaufenden Förderbändern geführt, deren Abstand vorzugsweise so gewählt wird, dass der schlauchförmige Filter weitgehend flachgelegt ist. Werden jedoch aufgrund der Beschaffenheit der abzutrennenden Feststoffe dickere Feststoffschichten an der Innenwand des Filters gebildet, ohne dass sich der Filtratdurchsatz zu stark verringert oder wird relativ hoher Betriebsdruck angelegt, so wird der schlauchförmige Filter möglichst allseitig abgestützt.

Nachdem in der Schlauchlänge aus semipermeablem Material die gewünschte Feststoffkonzentration und eine bestimmte maximale, mit Konzentrat gefüllte Schlauchlänge erreicht ist, wird die Schlauchlänge an ihrem noch offenen zweiten Ende verschlossen, beispielsweise durch Abbinden mit einer Schnur oder mit Hilfe von Metallklammern, wobei zuvor der weitere Zufluss von Abwasser oder Schlamm verhindert wird, beispielsweise durch eine Absperrvorrichtung im Füllrohr.

Das Absperren der beiden Öffnungen des schlauchförmigen Filters kann auch dadurch ermöglicht werden, dass man bis zum Erreichen eines hochviskosen Konzentrats filtriert, wobei der sich ausbildende Feststoffpfropfen die Schlauchenden verschliesst, und dem nachfolgenden Abwasser bzw. Schlamm ausreichend Widerstand entgegensetzt. Diese Verfahrensweisen ermöglichen die portionsweise Entnahme des Konzentrats aus der Anordnung, wobei die Filterhülle als Verpackung dient und insbesondere die Lagerung und den Transport gefährlicher oder unangenehm riechender Substanzen gestattet.

Der an beiden Enden geschlossene, mit weitgehend entwässertem Schlamm gefüllte Schlauch wird – eventuell nach weiterer Zerkleinerung – der Kompostierung zugeführt oder verbrannt. Bei Schlamm mit hohem organischen Feststoffgehalt ist eine derart weitgehende Konzentrierung erreichbar, dass bei der Verbrennung ausreichend Energie frei wird, um noch vorhandenes Restwasser zu verdampfen und die Verbrennung selbsttätig in Gang zu halten.

Vorzugsweise ist die Schlauchlänge aus semipermeablem Material flexibel und besteht beispielsweise aus regenerierter Cellulose. Er wird durch Fälteln und längsaxiales Stauchen hergestellt, wobei die Länge des rohrförmigen Filters im gerafften Zustand vorteilhafterweise nur noch 1 bis 3% seiner Ursprungslänge beträgt. Beim Abziehen des gerafften Filters vom Füllrohr während des Füllvorgangs wird der geraffte Teil kontinuierlich oder stufenweise entfältelt. Vorrichtungen und Verfahren zur Herstellung von gerafften Schläuchen sind bekannt und werden beispielsweise in den US-A-2 983 949 und US-A-2 984 574 beschrieben.

Bei einer anderen vorteilhaften Ausführungsform wird der schlauchförmige Filter unmittelbar vor dem Füllen, z.B. vor dem Füllrohr, aus einem Band geformt, welches spiralförmig gewickelt wird. Die sich überlappenden Ränder des Bandes werden durch Kleben, Siegeln oder Schweissen miteinander verbunden. Es ist auch möglich, einen Schlauch mit einer axial sich erstreckenden Längsnaht aus einem Band zu formen, dessen gegenüberliegende Ränder sich überlappen.

Wird allerdings eine entsprechend geformte Stützhülle verwendet, so ist ein Verbinden der sich überlappenden Ränder nicht erforderlich. Nach dem Abpressen des Filtrats wird das zu einem Schlauch geformte Band geöffnet und der weitgehend entwässerte Schlamm von dem plangelegten Band entfernt. Das Band wird danach, eventuell nach Reinigung mit Abstreifern, wiederverwendet.

Das vorliegende Verfahren ist insbesondere zur Abtrennung von giftigen, niedermolekularen oder mittelmolekularen Substanzen aus dem Schlamm geeignet. Das semipermeable Filtermaterial lässt Moleküle nur bis zu einer bestimmten Grösse passieren.

Die Erfindung wird anhand der in den Fig. 1 bis 9 gezeigten Anlagen erläutert.

Fig. 1 zeigt das Verfahrensprinzip der Reinigung von Abwasser in einem Eindickerbecken und Aufbereitung von Dekantat und Dickschlamm.

Fig. 2 bis 4 zeigen Anordnungen mit einem Füllstutzen und verschiedenen Ausführungsformen der Schläuche.

Fig. 5 bis 9 zeigen gefüllte Schläuche, die durch umlaufende Förderbänder transportiert, geformt und gestützt werden.

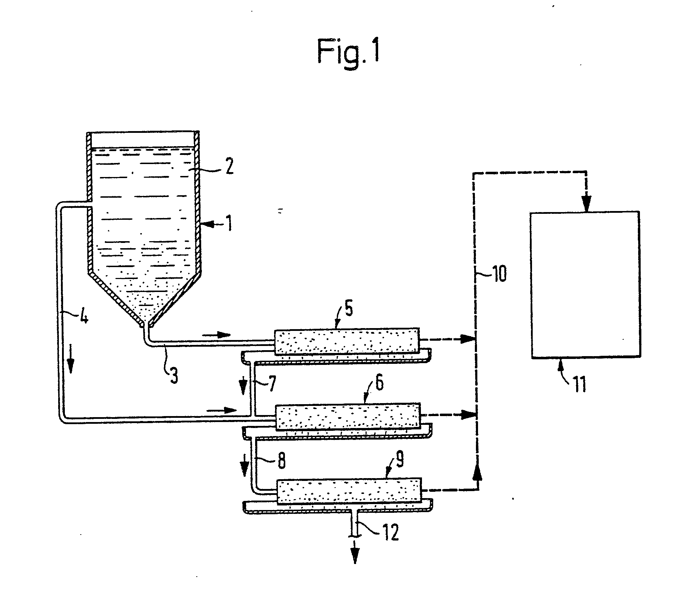

In Fig. 1 wird die zu behandelnde Dispersion 2 in einem Eindickerbecken 1 in Dickschlamm 3 und Überstand 4 getrennt. Beide Fraktionen werden schlauchförmigen Filtern 5 und 6 zugeleitet. Das Filtrat 7 aus Filter 5 wird mit Filter 6 nachbehandelt, das Filtrat 8 von Filter 6 wird mit dem semipermeablen Filter 9 erneut filtriert. Die durchschnittliche Porengrösse und der Durchmesser des Filters 6 sind kleiner als Porengrösse und Durchmesser des Filters 5. Das Konzentrat 10 wird der Verbrennung 11 zugeführt, das Filtrat 12 ist gereinigtes, klares Wasser.

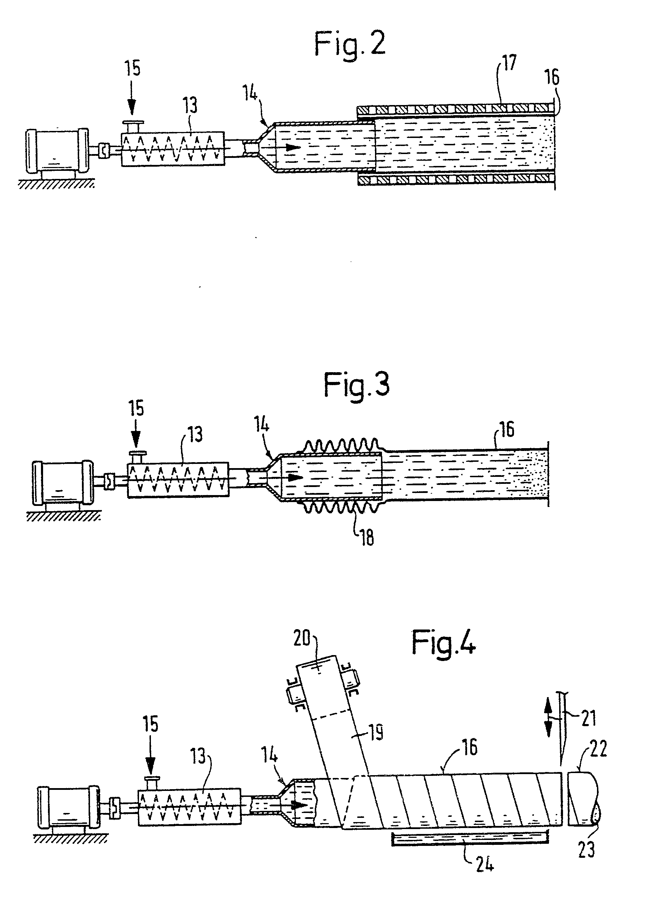

In Fig. 2 bis 4 wird die durch eine Pumpe 13 und durch den Füllstutzen 14 eingepresste Dispersion 15 in einem schlauchförmigen semipermeablen Filter 16 gereinigt. Der Filter 16 wird in Fig. 2 durch ein perforiertes Rohr 17 abgestützt. In Fig. 3 ist der semipermeable Filter ein aufgestockter, d.h. geraffter Schlauch 18, während er in Fig. 4 durch Wickeln eines Bandes 19 von einer Rolle 20 zu einem Schlauch 16 geformt wird und durch eine Abschneidevorrichtung 21 in transportfähige oder weiterverarbeitbare Abschnitte 22 geteilt wird. Das Konzentrat 23 im Schlauch 16 ist an der Schneidestelle bereits so viskos, dass ein Verschliessen des Schlauchendes mit Klammern nicht erforderlich ist. Das Filtrat wird in der Auffangvorrichtung 24 gesammelt.

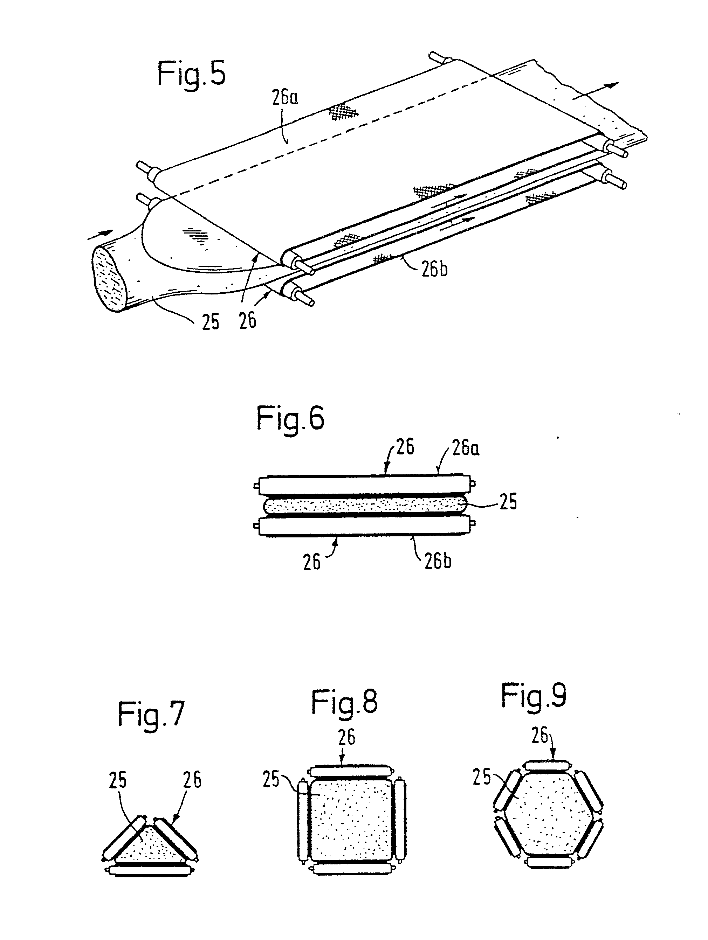

In Fig. 5 wird ein gefüllter schlauchförmiger Filter 25 durch zwei parallel übereinander verlaufende Förderbänder 26a und 26b zu einem flachen Schlauch geformt und abgestützt. Die Fig. 6 bis 9 zeigen den geformten Schlauch 25 mit 2, 3, 4 und 6 Förderbändern 26 im Schnitt.

## Patentansprüche

1. Filtrationsverfahren zur Abtrennung fester, schlammartiger und gelöster Anteile aus Abwasser oder aus bei der Reinigung des Abwassers anfallendem Schlamm, bei dem man zu filtrierende Flüssigkeit fortlaufend in den Hohlraum eines Schlauches aus Filtermaterial einführt und aus der Flüssigkeit abfiltrierten festen Stoff in diesem ablagert, dadurch gekennzeichnet, dass man von einer Schlauchlänge aus semipermeablem Filtermaterial mit originärem Verschluss an ihrem vorderen Ende ausgeht, zu Verfahrensbeginn die zu filtrierende Flüssigkeit nahe dem originären Verschluss am Anfang der Schlauchlänge unter einem Druck von 1 bis 10 bar in deren Hohlraum einführt und dann den Abstand zwischen dem Verschluss und dem Ort des Eintritts der Flüssigkeit in den Schlauch fortlaufend stetig vergrössert, wobei Konzentrat im Schlauch, beginnend am originären Verschluss der Schlauchlänge und kontinuierlich fortschreitend zum anderen Ende derselben hin abgelagert wird, und man anschliessend das hintere Ende derselben verschliesst, wobei man die Füllgeschwindigkeit des Schlauches in Abhängigkeit vom gewünschten Feststoffgehalt des Konzentrats steuert.

2. Verfahren nach Anspruch 1, dadurch gekennzeichnet, dass man als Ausgangsmaterial eine Schlauchlänge aus Cellulosehydrat verwendet.

3. Verfahren nach Ansprüchen 1 und 2, dadurch gekennzeichnet, dass man als Ausgangsmaterial einen Hohlstab aus einer längsweise gerafften Schlauchlänge aus Cellulosehydrat verwendet.

## Claims

1. Filtration process for separating solid, sludge-like and dissolved constituents from effluent or from sludge obtained on purifying effluent, by continuously introducing liquid to be filtered into the cavity of a tubing of filter material and allowing solid matter filtered off from the liquid to deposit in the tubing, wherein the starting material used is a length of tubing comprising a semi-permeable filter material, which has an initial closure at its forward end, the liquid to be filtered is, at the beginning of the process, introduced into the cavity of the length of tubing close to the initial closure at its forward end, under a pressure of 1 to 10 bars, and the distance between the closure and the point of introduction of the liquid into the tubing is then continuously and steadily increased, whereby concentrate is deposited in the tubing, beginning at the initial closure of the length of tubing and continuously progressing towards the opposite end thereof, and the rear end of length of tubing is subsequently closed, with the filling rate of the tubing being controlled as a function of the desired solids content of the concentrate.

2. A process as claimed in claim 1, wherein the starting · material used is a length of tubing comprising cellulose hydrate.

3. A process as claimed in claims 1 and 2, wherein the starting material used is a hollow rod comprising a longitudinally shirred length of tubing of cellulose hydrate.

## Revendications

1. Procédé pour la séparation de produits solides, boueux et dissous à partir d'eaux résiduaires ou à partir de boues recueillies lors de l'épuration de ces eaux résiduaires pour l'application duquel l'on dirige d'une manière continue le liquide à filtrer dans la cavité d'un boyau en matériau filtrant, dans laquelle se déposent les substances solides libérées de leur eau, caractérisé en ce que l'on part d'une portion de boyau en matériau filtrant semi-perméable doté d'une fermeture originaire à son extrémité antérieure, en ce que au début du processus de filtrage l'on dirige, sous une pression de 1 à 10 bars, le liquide à filtrer sur l'intérieur du boyau et à proximité de la fermeture originaire placée sur l'extrémité antérieure de la portion de boyau, ce qui agrandit d'une manière continue et régulière la distance entre la fermeture et le point d'entrée du liquide dans le boyau, de manière que le produit concentré se dépose dans le boyau en commençant à la hauteur de la fermeture originaire et en progressant d'une manière continue et régulière pour atteindre l'extrémité opposée de la portion de boyau avant de procéder finalement à l'obturation de l'extrémité arrière de ce boyau et en ce que l'on règle la vitesse de remplissage du boyau en fonction de la teneur en substances solides du produit concentré final.

2. Procédé selon la revendication 1, caractérisé en ce que l'on utilise comme matériau de départ une portion de boyau en hydrate cellulosique.

3. Procédé selons les revendications 1 et 2, caractérisé en ce que l'on utilise comme matériau de départ une tige creuse constituée d'une portion de boyau, plissée dans le sens longitudinal, en hydrate de cellulose.

# Fig.1

# Fig. 2

# Fig. 3

# Fig. 4

# Fig.5

26a

25  26  26b

# Fig.6

26  26a

25

26  26b

# Fig.7

25  26

# Fig.8

26

25

# Fig.9

26

25